# EUROPEAN PATENT APPLICATION

(11) **EP 2 518 726 A1**
(43) Date of publication of application: **31.10.2012**
(21) Application number: 11189415.0
(22) Date of filing: 16.11.2011
(51) Int. Cl.: G11B 7/005, G11B 7/007, G11B 7/26

(54) **Recordable Optical Recording Carrier and Method for Manufacturing Recordable Optical Recording Carrier Compatible with CD-R**

(30) Priority: 26.04.2011 TW 100114479
(71) Applicant: Princo Corp., Hsinchu (TW)
(72) Inventor: CHIU, Pei-Liang, Hsinchu (TW)
(74) Representative: KATZAROV S.A.

(57) **Abstract**

An optical recording carrier including, in a data recording area, a continuous-grooved main track (12) for recording primary data to be stored, and a subtrack (13) for recording control data including parameter data and address information. The control data includes a clock signal needless to be provided by the main track (12). The subtrack (13) has a narrower full width at half maximum (FWHM) and a shallower depth than the main track (12). The distance (d') between the main track (12) and the subtrack (13) is not more than half of that between two adjacent main tracks (12). The main track (12) and the subtrack (13) form a double-spiral pattern. When recording data, a recording spot tracks mostly along the centerline of the main track (12) and reads the control data in the subtrack (13) simultaneously to control the recording process. A method for manufacturing a recordable optical recording carrier compatible with a conventional CD-R is also provided.

## Description

### BACKGROUND OF THE INVENTION

### A. Field of the Invention

The present invention relates to a high density recordable optical recording carrier employing a double-spiral track pattern and a method for manufacturing the same.

### B. Description of the Prior Art

An optical recording carrier, in which various formats of data can be stored, is the most convenient storage medium in the new generation optical storage market. It can be applied to a comprehensive range of fields, such as library collection, data backup, electronic publication, image data storage, personal medical record management, and so on.

When recording user data to be stored with a recordable optical recording carrier, adequate control data is required for controlling the entire recording process. The control data can be divided into two categories, which are parameter data and address information data respectively.

The parameter data is retrieved from a blank recordable disc before recording for adjusting the recording parameters of a recording apparatus to adequate values, and then the recording is performed. Thus, it can be ensured that the recording process is accomplished successfully without fault, and the optical recording carrier which have undergone the recording process is compatible with a reading apparatus. The aforementioned parameters include: laser power during recording, types of recorded data, reference linear velocity, start address and maximum possible recording address, and so on.

In most of commercially available optical recording carriers, such parameter data is recorded in an area located in the inner side of an optical recording carrier, so called lead-in area. However, such parameter data may also be recorded in the program area.

The address information data is retrieved from a blank disc through out the recording process for determining and controlling recording positions, and for facilitating recording various user data in adequate addresses. Therefore the address information data is also recorded in areas other than the lead-in area in the optical recording carrier.

The recording formats that parameter data and address information data are recorded in a recordable optical recording carrier can be divided into three categories.

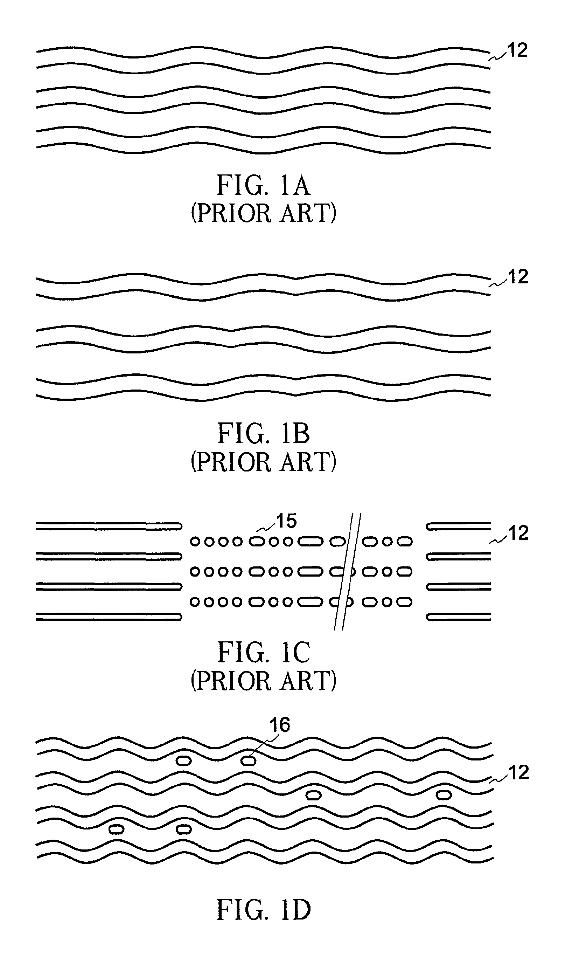

With respect to the first category, in a conventional CD-R disc, for example, the parameter data and address information data (absolute time code) are all subjected to channel coding to form identical-length data frames. Thereafter, the serial digital data in each data frame are subjected to frequency modulation with a 22.05 kHz carrier one frame after another. Finally, the frequency-modulated signals are recorded in main track 12 (FIG. 1A) by way of track wobble, so it is usually referred as an absolute time-code in pre-groove (ATIP), in which the wobbled main track 12 is the area for a user to record information. In addition, this track modulation format is also used in, for example, CD-RW or MD (mini disc). For a DVD+R/RW disk, the two kinds of data signals are modulated by a carrier phase modulation (FIG. 1 B).

The format in the second category is used in such as the early MO disk, in which the parameter data is recorded in an inner annular area by a way similar to bar-coding, while the address information is recorded in a header area 15 (FIG. 1 C) by cutting the track at some locations to form pits.

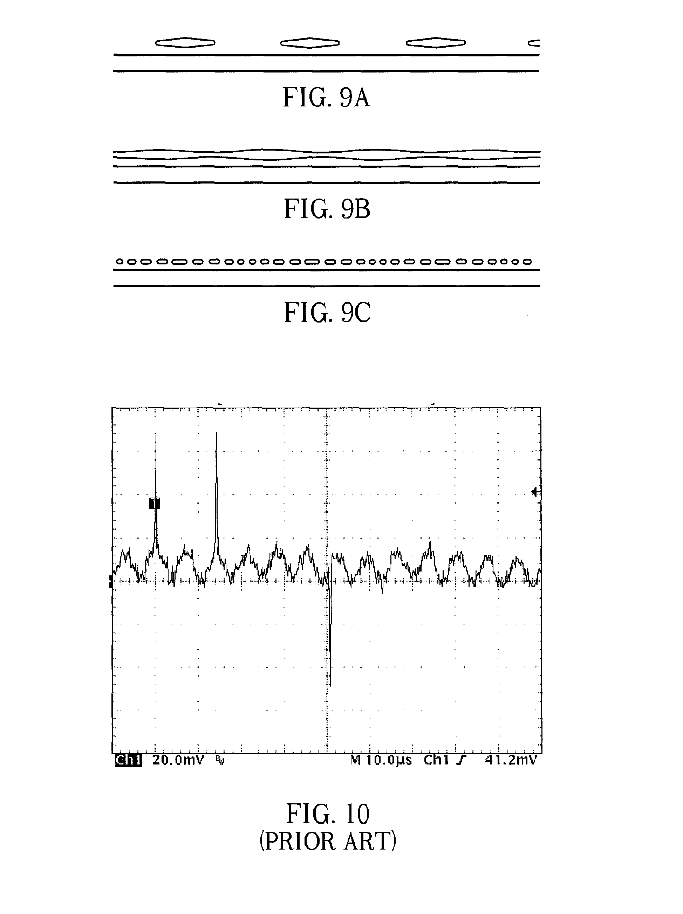

In the third category, the recording format of a DVD-R disc, for example, is that the recording process is performed using so called land pre-pits (LPP) method as shown in FIG. 1 D (referring to U.S. Patent 6,075,761). In the LPP method, intermittent and short small pits 16 are embossed in land area between two adjacent main tracks 12 corresponding to specific phase position for recording track wobble. The pits data need to be read and decoded with reference to the phases of track wobble signals. In the derived wobble signals as shown in FIG. 10, the three pulses with particularly high-level represent the locations of small pits 16. The inner lead-in area has a control data zone, in which the parameter data and the address information data are recorded by way of LPP, while only address information data is recorded in the remaining area of DVD-R disc. Before a manufactured DVD-R is released to the market, the parameter data has to be written into the control data zone by a conventional burning process using a pre-writer.

In the first recording format such as the aforesaid CD-R, CD-RW, DVD+R/RW, and MD, the main track 12 itself is subjected to a track modulation which is a method for recording modulated control data by track wobble in redial direction. However, the format of frequency-modulated recording via track wobble used in such as CD-R and MD is problematic for the case of a high density optical recording carrier. The significantly reduced distance between adjacent tracks in the high density optical recording carrier may cause the signal-to-noise ratio (S/N) of the track wobble signal become lower, and the reading of a wobble signal is thus disturbed by crosstalk from an adjacent track signal. In view of this, it is necessary to increase the wobble amplitude. However, although the increased amplitude may lead to a slightly increased signal-to-noise ratio, the crosstalk from an adjacent track signal would be increased as well.

On the other hand, in order to avoid the aforesaid problems, phase modulation is employed in the DVD+R/RW format, so that the reading and decoding will be less disturbed by the crosstalk from an adjacent track signal even when a large track wobble is applied. However, as shown in FIG. 1 B, the major disadvantage of this format is that the direction of a track may change instantly at the points corresponding to a phase conversion. Under such circumstance, when reading the recorded user data, a signal disturbance similar to that of an interrupted track will occur. Therefore, this track format is considered unfavorable since the recorded user data signals may be disturbed, and the error rate when reading data may increase.

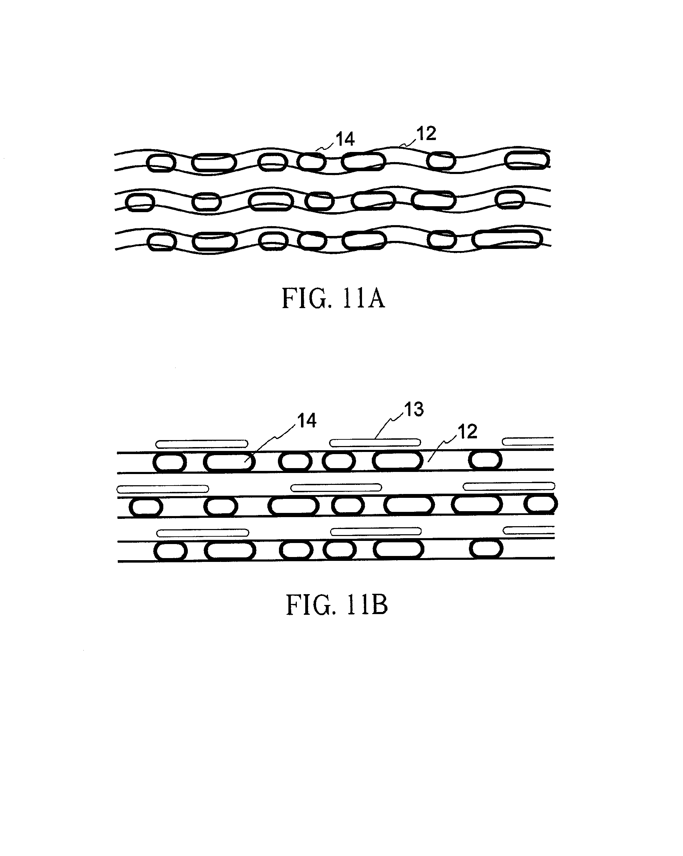

Moreover, with regard to the aforesaid formats, since the amplitude of track wobble thereof is too large, the recording spots are not maintained on a specific (central) location on the track during data recording. In other words, as shown in FIG. 11A, laser recording spots 14 deviate from the center of the tracks, so they may perform recording on the inner side of the track (center side of the optical recording carrier) or the outer side of the track (edge side of the optical recording carrier). Therefore, a higher jitter rate and a lower signal-to-noise ratio may be caused when the recorded data is read.

Another problem of the aforementioned formats is that, since the track wobble frequency has to match the frequency band for recording the data to be recorded and control data, the usable frequency band is limited, and high frequencies cannot be chosen. In general, the wobble frequency is used as a servo feedback signal for rotational speed control, so a low frequency may not satisfy the need for controlling a high density optical recording carrier with a high accuracy.

Regarding the second recording format mentioned above, take such as the previous recordable optical recording carrier, MO disc, and DVD-RAM disc for instance, the tracks thereof are divided into many sectors. A header area 15 is provided in front of each sector, and the control data is recorded in manner of intermittent pits. In this recording format, the recorded control data may be obtained by directly reading an electrical signal from a central aperture (CA) of an optical pickup head (detector). However, there are two problems for this recording format. First, the track may be interrupted by the header areas 15, so this recording format is not suitable for continuously recording data such as CD music or DVD movies. Second, a buffer gap is required for the optical recording carrier of this recording format to prevent the recorded data from overlapping the header signal in a recording area due to unstable control of rotational speed, and thus the recording density being reduced. Furthermore, the buffer gap should not be too small to absorb variations resulting from the aforesaid unstable control. Based upon the above reasons, this format is seldom used at present. Currently, the majority of recording carriers follow the method of using a continuous track to record data.

Regarding the aforementioned third recording format, or LPP, since it is necessary for the decoding of the LPP format to be performed in accordance with the phase of track wobble, the track for recording data needs to be provided with a considerable level of wobble. Although a relatively low level of wobble may be adopted, as the problems mentioned above, which are the crosstalk between adjacent track wobble signals and the increased jitter and error rate resulting from failing to maintain the recorded data at the center of the track due to track wobble, can only be eased but not completely precluded. Furthermore, since the pit length of the LPP is equivalent to the length of the smallest recorded data pits, the recorded signal is prone to be disturbed by the LPP signal during reading, and thus causing misjudgement of the signal. As a result, if the level of the LPP signal is too high, the accuracy of reading a signal may be affected by the aforementioned crosstalk. On the other hand, if the level of the LPP signal is too low, the signal is prone to be misjudged such that a decoding error may be caused and the recording process may be affected. Therefore, it becomes very difficult to control the manufacturing process, so the production cost will increase. Lately, although a single beam recording method for producing compatible LPP signal has been proposed, the aforesaid problems have not been solved yet. In addition, control data has to be additionally recorded on a DVD-R by a pre-writer before the DVD-R is released to the market. This pre-writing operation will increase manufacturing steps, significantly increase the production cost, and adversely affect the efficiency of manufacturing optical recording carriers.

### SUMMARY OF THE INVENTION

In view of the above problems, the present invention provides an optical recording carrier and a method for manufacturing the same, of which the patterns and formats for a recording track and data to be recorded can be selected with high degree of freedom. The track pattern and the recording format can be adequately selected based on recording requirements, so an appropriate track recording mode can be provided to allow an optical pickup head to obtain a high quality signal when reading the recorded data.

Specifically, the present invention provides an optical recording carrier and a method for manufacturing the same, wherein control data is recorded in a simple and independent format. When the optical pickup head is reading data, the recorded control data can be directly read and independently decoded without using any additional reference signal, thereby extracting parameter data and address information from the control data to control the recording process.

In addition, another object of the present invention is to provide a method for manufacturing an optical recording carrier which complies with the existing specification of an optical recording carrier, and is compatible with an existing reading device. Therefore, neither a redesigned circuit of the reading device nor a newly-developed reading device will be needed, and the aforesaid problems in association with the current specifications can be improved.

Furthermore, yet another object of the present invention is to provide an optical recording carrier and a method for manufacturing the same. The optical recording carrier possesses compatibility between the specifications of high speed and high density optical recording carriers, thereby conforming to the development trend of high speed and high density optical recording carriers.

In order to achieve the above objects, the present invention provides an optical recording carrier comprising: a spiral track provided in a data recording area, wherein the spiral track includes a main track and a subtrack, the main track being a continuous groove used to record user data to be stored, the subtrack being configured to record control data including parameter data and address information data to control a recording process, and the control data recorded in the subtrack includes a clock signal, so the control data can be independently decoded without using any signal provided by the main track, the full width at half maximum (FWHM) and depth of the subtrack are narrower and shallower than those of the main track, the distance between the main track and the subtrack is equal to or less than half of that between two adjacent main tracks. In other words, the subtrack is closer to one of the two adjacent main tracks. When scanning the main track, the address information may be obtained via the adjacent subtrack.

In the aforesaid recordable optical recording carrier, preferably, no wobble is applied on the main track. The FWHM and the depth of the subtrack are preferably equal to or less than half of those of the main track. The ratio of the volume of the subtrack to the volume of the main track is preferably less than 1/4. The distance between the main track and the subtrack is preferably equal to or more than 1/3 of the distance between the two adjacent main tracks. Preferably, the subtrack is a continuous groove of which the width has been modulated, or is formed by arranging a plurality of intermittent pits of which the lengths, widths, or intervals have been modulated. Preferably, the said modulation is a bi-phase modulation or a bi-phase code modulation. Alternatively, the modulation is preferably a frequency modulation (FM), pulse-width modulation (PWM), or pulse-position modulation (PPM).

In addition, the present invention provides a method for manufacturing a recordable optical recording carrier compatible with CD-R, comprising the steps of: providing a spiral track including a main track and a subtrack in a data recording area, wherein the main track is a continuous groove used to record primary data to be stored, and the absolute time code data of CD-R is recorded in the subtrack to control a recording process. The subtrack has a FWHM and a depth that are narrower and shallower than those of the main track, and the distance between the main track and the subtrack is less than half of that between two adjacent main tracks.

In the aforesaid method for manufacturing a recordable optical recording carrier compatible with CD-R, preferably, no wobble is applied on the main track. The FWHM and the depth of the subtrack are preferably equal to or less than half of those of the main track. A ratio of the volume of the subtrack to the volume of the main track is preferably less than 1/4. The distance between the main track and the subtrack is preferably equal to or more than 1/3 of the distance between the two adjacent main tracks. The subtrack is preferably to be a continuous groove whose width has been modulated, wherein a change of the width is equivalent to an absolute time code signal of CD-R. Preferably, the subtrack is formed by arranging a plurality of intermittent pits of which the lengths, widths, or intervals have been modulated, wherein a variation of the lengths, widths, or intervals of the pits is equivalent to a frequency modulation of an absolute time code data of CD-R.

In the present invention, since the user data will be recorded in the main track and the control data is pre-recorded in the subtrack, that is, the user data and the control data are recorded separately, the present invention provides a high degree of freedom in selecting track patterns for recording data and formats of data to be recorded. An adequate track pattern and a recording format may be selected based on the recording demand, so as to provide an appropriate track recording mode for enabling an optical pickup head to obtain a high quality signal when reading the recorded data.

Specifically, since the user data and the control data are separately recorded in the main track and the subtrack in the present invention, the recording formats for the main track and subtrack can be selected independently. Accordingly, the control data recorded in the subtrack can be directly read and independently decoded without using any additional reference signal provided by the main track. Therefore, the present invention is unlike a conventional DVD-R disk where control data has to be read and decoded with reference to the phase of a track wobble signal.

Furthermore, since the user data and the control data are recorded separately in the present invention, simple formats such as formats without track wobble can be used in the main track and subtrack, so that the user data and the control data can be recorded, read, and decoded in a simpler manner. On the contrary, in a conventional CD-R disk, in order to record both user data and control data in one track, the track used to record the user data has to record the control data by way of track wobble. Therefore, for being able to be recorded, the user data and the control data must comply with specific and complicated recording rules and formats. Moreover, the accuracy of data reading may be affected by the track wobble. In addition, the data has to be decoded through complicated decoding rules after being read.

Under the condition that the main track does not show a wobbling pattern as in the conventional CD-R, even when applying the present invention to a high density optical recording carrier, the following situation would not occur: the adjacent tracks of the high density optical recording carrier are so close that the crosstalk from adjacent track signals would occur when an optical pickup head is reading a wobble signal, which results in a reduction of the signal-to-noise ratio (S/N) of the signal.

Similarly, under the condition that the main track of the present invention does not show a wobbling pattern as in the conventional CDR/RW, DVD-R/RW, or DVD+R/RW disc, recording spots can be kept on the central position of a track during data recording. In other words, the deviation of the recording spots from the track center is small, so it does not tend to occur that the recording spot is on the inner side of the track in some cases while being on the outer side of the track in other cases. Accordingly, the signal-to-noise ratio may be increased and the jitter may be decreased when reading the recorded data.

Furthermore, under the condition that the main track of the present invention does not show a wobbling pattern as in the conventional DVD+R/RW optical recording carrier, apparently, the instant change of track direction shown in FIG. 1 B will not occur. Therefore, a signal pattern similar to that of an interrupted track occurring when reading data in a conventional DVD+R/RW optical recording carrier can be avoided, thereby reducing the error rate upon reading data.

Since the main track of the present invention does not show a wobbling pattern as in a conventional CD-R optical recording carrier, and the user data and the control data are recorded in the main track and the subtrack respectively, the frequency of the control data recorded in the subtrack may be elevated. Accordingly, the following situation occurring in a conventional CD-R optical recording carrier may be avoided: the track wobble frequency used in the servo feedback signal for controlling the rotational speed must avoid the frequency band of the user data and the control data to be recorded, which makes an elevated frequency inapplicable, and the need for controlling a high density optical recording carrier with a high accuracy cannot be fulfilled. Furthermore, the elevated frequency used in the present invention may become higher than the frequency response range for tracking the servo system, so the positional relationship between the optical pickup head and the main track may not be affected during the recording. As a result, the optical pickup head will move along the centerline of the main track, and the recording spot is kept at the central position of the main track.

In the present invention, since the FWHM and the depth of the subtrack are equal to or less than half of those of the main track, the user data recorded in the main track and the control data recorded in the subtrack can be clearly indentified when being read. Thus, unlike what will occur in the conventional DVD-R optical recording carrier, the LPP signal and the smallest recorded signal will hardly be misjudged as being read due to the similar lengths thereof.

Similarly, in the present invention, since the FWHM and the depth of the subtrack are equal to or less than half of those of the main track, the signal level of the control data recorded in the subtrack is far lower than that of the user data recorded in the main track. Therefore, the signal of the user data recorded in the main track will not be disturbed or adversely affected by the signal of the control data recorded in the subtrack during data reading.

It is inevitable that the development of a manufacturing process for a conventional optical recording carrier includes a complicated parameter adjustment process. On the contrary, for the present invention, since there is no wobble applied on the main track, and the formats of the subtrack and the main track are simple and independent of each other, controlling the manufacturing process of optical recording carriers becomes easier, and the production cost is reduced significantly, thereby improving the yield of optical recording carriers. In addition, when applying the optical recording carrier of the present invention to practical use, the steps of recording, reading and decoding can be simplified, which significantly reduces the error rate of data reading and writing, and thus increasing the speed of data reading and writing.

Furthermore, since the present invention provides a high degree of freedom in selecting track patterns and data recording formats, the optical recording carrier and the method for manufacturing the same according to the present invention may comply with the specification of a current optical recording carrier, and be compatible with a current reading device. Therefore, there is no need to redesign the circuit of a reading device or develop a new reading device, and the present invention possesses compatibility between the specifications of high speed and high density optical recording carriers. As a result, the present invention conforms to the development trend of high speed and high density optical recording carriers.

### BRIEF DESCRIPTION OF THE DRAWINGS

FIG. 1A is a schematic diagram illustrating a track structure of a conventional CD-R optical recording carrier;
FIG. 1 B is a schematic diagram illustrating a track structure of a conventional DVD+R/RW optical recording carrier;
FIG. 1C is a schematic diagram illustrating a track structure of a conventional MO disk;
FIG. 1 D is a schematic diagram illustrating a track structure of a conventional DVD-R optical recording carrier;
FIG. 2A is a schematic diagram illustrating the top view of a track structure of an optical recording carrier according to the present invention;
FIG. 2B is a cross-section view of FIG. 2A taken along line A-A';
FIG. 3A is a schematic diagram illustrating that a bi-phase (code) modulation is applied on the subtrack of an optical recording carrier according to the present invention;
FIG. 3B is a schematic diagram illustrating that a frequency modulation is applied on the subtrack of an optical recording carrier according to the present invention;
FIG. 4 is a schematic diagram illustrating a frequency modulation method for a conventional CD-R;
FIG. 5 shows a waveform of a wobble signal for a conventional CD-R;
FIG. 6 is a schematic diagram illustrating the production of an optical recording carrier compatible with CD-R using the manufacturing method according to the present invention;
FIG. 7 is a schematic diagram illustrating the structure of an optical recording carrier compatible with CD-R according to the present invention;
FIG. 8A shows a waveform of an original push-pull signal without being band-pass filtered for an optical recording carrier compatible with CD-R according to the present invention;
FIG. 8B shows a waveform of a push-pull signal being band-pass filtered for an optical recording carrier compatible with CD-R according to the present invention;
FIG. 9A shows that the subtrack according to the present invention includes intermittent grooves which are getting deeper and broader and then getting narrower and shallower;
FIG. 9B shows that the subtrack according to the present invention is a continuous groove whose width changes constantly;
FIG. 9C shows that the subtrack according to the present invention includes a plurality of small pits whose lengths change constantly;
FIG. 10 shows a wobble signal of a conventional DVD-R;
FIG. 11A shows the positional relationship between the recording spots of the conventional wobbled track and tracks, and FIG. 11 B shows the positional relationship between the recording spots of the present invention and main tracks.

### DETAILED DESCRIPTION OF THE PREFERRED EMBODIMENTS

The present invention will be described in detail hereinafter with reference to the accompanying drawings which, however, do not limit the present invention in any way.

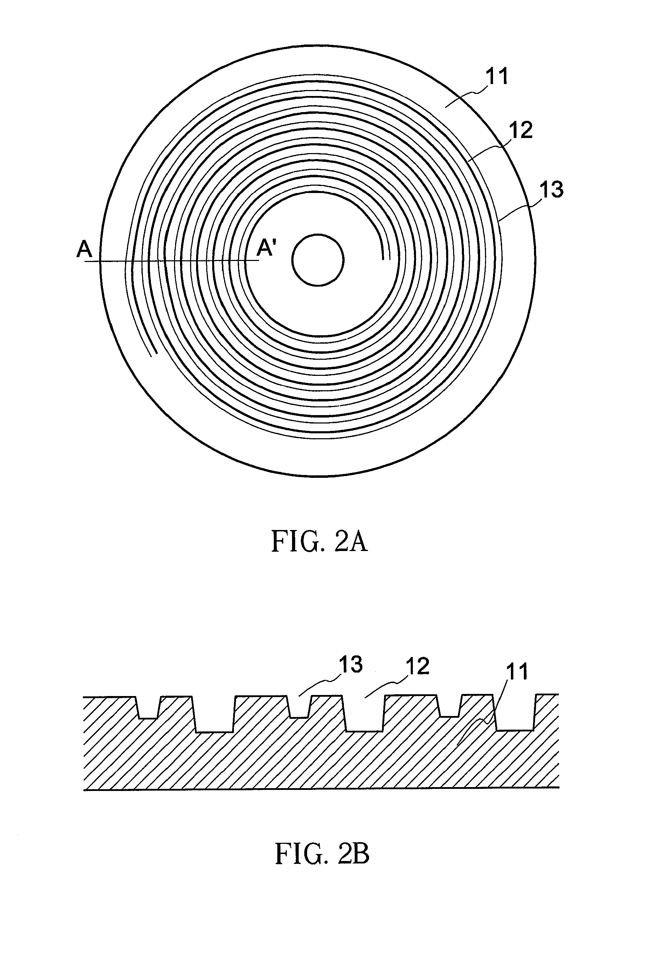

FIG. 2A is a schematic diagram illustrating the top view of a track structure of an optical recording carrier according to the present invention, and FIG. 2B is a cross-section diagram of FIG. 2A taken along line A-A'.

A photosensitive material is coated on an optical recording carrier substrate 11, so that data may be optically recorded, and the recorded data may also be optically read afterwards. As shown in FIG. 2, a spiral track is provided on the optical recording carrier substrate 11, wherein the track is formed into two spiral lines, which are a main track 12 and a subtrack 13 respectively. The main track 12 is used to record user data to be stored, while the subtrack 13 is used to record control data containing parameter data and address information data. The main track 12 is a spirally continuous groove having a U-shaped cross-section in the radial direction of the optical recording carrier substrate 11, a depth (or height) deeper than that of the subtrack 13, and a FWHM broader than that of the subtrack 13. The subtrack 13 is a spiral groove having a depth equal to or less than half of that of the main track 12, and a FWHM equal to or less than half of that of the main track 12 (see FIG. 2B). The control data recorded in the subtrack 13 may be read out independently, or read out and decoded by a track push-pull signal provided by the main track 12, so as to control the recording.

As shown in FIGS. 2A and 2B, the positional relationship between the main track 12 and the subtrack 13 of the optical recording carrier substrate 11 is described as follows: the center of the subtrack 13 is not located at the central position between two adjacent main tracks 12. Actually, the subtrack 13 is closer to one of these two main tracks 12. When recording or reading, the laser spot will focus on the main track 12, and the signal from the subtrack 13 close to the main track 12 will be read out at the same time.

The main track 12 is used to record the user data to be stored. There may be either no periodical wobble or only a tiny wobble in the track. The subtrack 13 is used to record the control data which is needed for the optical recording carrier to record the user data. The control data includes recording power, disc capacity, reference scanning velocity, address information and so on. Since the user data and the control data are recorded in the main track 12 and the subtrack 13 separately, an adequate and independent format may be selected for recording the control data in the subtrack 13, thereby providing a high degree of freedom in format selection.

During the manufacturing process of the optical recording carrier substrate 11, a photosensitive material (a photoresist layer) is coated on a surface of a flat glass substrate, and then the photoresist layer on the glass substrate is exposed along a spiral track by moving two laser beams, which can both focus on the glass substrate, relative to the rotating glass substrate from a position near the center of the glass substrate towards the periphery thereof, or from a position on the periphery of the glass substrate towards the center thereof, in a well-controlled fashion. When the laser beams focus on the glass substrate, the distance between the two focal spots of the laser beams is less than half of the distance between two adjacent main tracks 12, so as to enable the formed subtrack 13 to be closer to one of the two main tracks 12. The laser beam used to form the main track 12 is controlled to perform the exposing process with a higher output power, while the laser beam used to form the subtrack 13 has a lower output power. Afterward, a developing process is performed after the exposing process. When performing the developing process, the degree of development may be controlled, so as to develop the main track 12 to the glass surface to form a deeper and broader continuous groove having a U-shaped cross-section in the radial direction of the glass substrate, while partially developing the subtrack 13 to form a narrower and shallower pattern. The developed glass substrate is subsequently subjected to conventional manufacturing processes of an optical recording carrier, such as mold electroforming, separating, hole-punching, and plastic injection, to produce the optical recording carrier substrate 11.

A wobble signal of a constant frequency may be applied on the laser beam used to form the main track 12, so as to enable the main track 12 to have a tiny wobble, which is used as a servo feedback signal for controlling the rotation in the subsequent recording step. However, in general, there is no need to add this kind of wobble signals in the main track 12, because such signals may be provided by the subtrack 13 independently, and the main track 12 only needs to provide a groove pattern having a stable geometric shape, so as to enable the user data to be stably recorded thereon. In the present invention, since the main track 12 and the subtrack 13 of the optical recording carrier substrate 11 are independent of each other, the main track 12 and the subtrack 13 may adopt different frequencies. For example, a rotating servo signal of the subtrack 13 may be an integral multiple of the wobble frequency of the main track 12. Therefore, when the recording is performed on an optical recording carrier made of the optical recording carrier substrate 11 at different scanning velocities, a disk driver may select to lock either a signal from the main track 12 or a signal from the subtrack 13 based on a suitable control frequency, so that a specific frequency band is limited to perform the rotating servo control, thereby achieving a higher stability. The aforesaid data recorded in the subtrack may be used for modulating a carrier of a higher frequency by frequency modulation (FM) or other modulation methods, such as frequency-shift keying (FSK) and phase-shift keying (PSK).

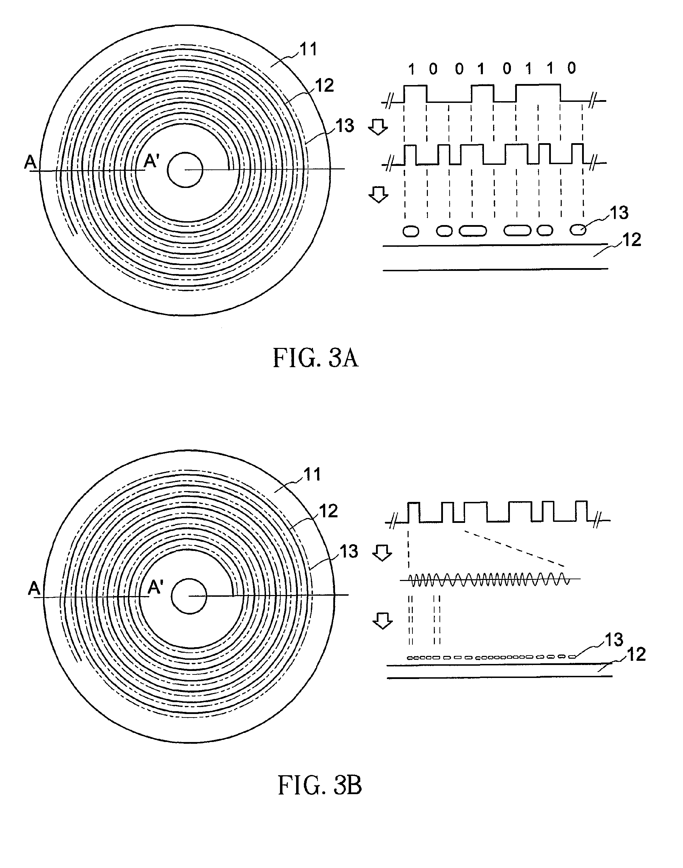

In other words, although in FIG. 2, the subtrack 13 is a continuous groove, it may also be a track formed by arranging a plurality of intermittent pits which have been subjected to the aforesaid modulations. The modulation method for the subtrack is described as follows. FIG. 3A is a schematic diagram illustrating a bi-phase modulation (or bi-phase mark code modulation) applied on the subtrack of an optical recording carrier according to the present invention, and FIG. 3B is a schematic diagram illustrating a frequency modulation applied on the subtrack of an optical recording carrier according to the present invention.

The laser beam used to form the subtrack 13 records the control signal in the subtrack 13 by switching on/off the laser beam or modulating the laser output power with an acoustic optical modulator. The data recorded in the subtrack 13 may adopt any recording format other than that used in the main track 12, and may be directly read and independently decoded via a push-pull signal or central aperture signal of the optical pickup head. Since the subtrack 13 is not used to record user data and is shallow and narrow, when a disk driver performs a recording, a very low signal level is sufficient for a clear readout. After the data is written, the level of the signal is much lower than that of the recorded user data signal, so the reading of the recorded user data will not be affected adversely, thereby providing a high degree of freedom in selecting a data recording format for the subtrack 13. In order to avoid the data signal to contain relatively high direct current components and in consideration of the need for deciding whether to include a timing signal, or merely use a lower signal level to correctly decode, the signals may be adequately encoded in advance, for example, applying a bi-phase modulation or a bi-phase code modulation on them. Afterward, the signals may be directly recorded in the subtrack 13 in an optical mark format representing signal changes (see FIG. 3A). Since the bi-phase modulation or the bi-phase code modulation themselves include a clock signal, the decoding may be performed independently. Alternatively, the data signals may be further modulated via other modulation methods, and then recorded in the subtrack 13, for example, they may be modulated via FM, PWM, FSK, or QPSK, and then recorded in the subtrack (see FIG. 3B). As long as the frequency band used to record the data signal is not within the control frequency band of the tracking servo mechanism (usually equal to or less than 10 KHz) and the frequency band used to record the user data (usually equal to or more than hundreds KHz), any possible interference can be avoided. In other words, as long as the frequency band used to record the control data in the subtrack 13, the control frequency band of the tracking servo mechanism, and the frequency band of the user data in the main track 12 are not the same order, the interference caused by the proximity of the three frequency bands can be avoided, and a significantly large differentiation for the three frequency bands needed in conventional methods is no longer necessary.

In order to avoid excessive deviation of the recording spot from the center of the main track 12 during tracking, the distance between the main track 12 and the subtrack 13 should be small. Specifically, a distance between the main track 12 and the subtrack 13 is preferably less than half of the distance between two adjacent main tracks. In general, the determination of the distance is a set of complicated parameter adjusting processes, as that is needed in establishing a production process for any kind of optical recording carriers. The main purpose of this adjustment is to enable the signal level of the control data read out by the optical pickup head to be within a predetermined specification range during the recording. In addition, the signal specifications of the recorded data must be met. Such adjustment may be achieved by coordinately adjusting two parameters, one of which is the distance between the main track 12 and the subtrack 13, and the other is the volume ratio of the main track 12 to the subtrack 13. The distance between the main track 12 and the subtrack 13 is set by the laser beam recorder, and this setting may be tuned by adjusting optical lenses or according to the deflector control signal of the subtrack 13. The volume ratio of the main track 12 to the subtrack 13 is a function of the laser power ratio and the developing parameters in the mastering process, so the volume ratio may be controlled by adjusting the laser power ratio of the main track 12 to the subtrack 13 in compliance with the developing parameters.

As shown in FIG. 3, the subtrack 13 is located between two adjacent main tracks 12 except for the outmost portion of the subtrack 13, and is closer to one of the two main tracks 12. According to our experiences, if d represents the distance between the two adjacent main tracks 12, and d' is the distance between the subtrack 13 and the main track 12, which is closer to the subtrack 13 among the two adjacent main tracks 12, the optimized condition for achieving a best effect is " 1/3 d<d'<1/2 d ". Preferably, the volume ratio of the subtrack 13 to the main track 12 is equal to or less than 1/4. In fact, as long as the control signal to be read is sufficient for decoding, the volume ratio should be as small as possible, so that the effect caused by the deviation of the tracking spot from the track can be reduced, and the interference occurring in reading the recorded data can also be reduced. Furthermore, in consideration of factors such as the power distribution character of the laser beam and the developing control, the main track 12 is preferably provided with a U-shaped cross-section in the radial direction, while the subtrack 13 is preferably provided with a V-shaped cross-section in the radial direction.

During the recording, such optical recording carriers made of the substrate 11 may lock the scanning speed via the clock signal provided by the control data recorded in the subtrack 13, and may use the push-pull signal or the central aperture signal of the optical pick up head to extract the control data embedded in the subtrack 13. As mentioned above, the control data signal may be channel-encoded, modulated via carriers, and then recorded in the subtrack 13. Since the subtrack 13 is not a track used to record the user data, it is feasible to choose either channel encoding or carrier modulation, and thus providing a high degree of freedom in format selection. Accordingly, numerous problems concerning interferences and frequency band distributions, which should be considered for conventional optical recording carriers, can be disregarded in the present invention.

### Embodiments of the invention

The following examples will describe the application of the present invention in the production of high density and CD-R optical recording carriers.

### Example 1: High density optical recording carrier

The present invention may be used to develop a high density optical recording carrier, and one feasible method therefor is described as follows. In the mastering process, a glass substrate 31 coated with photoresist is exposed to two laser beams. Among these two laser beams, the one used to form the main track 12 has a higher power and a wobble signal is not necessary, while the other one used to form the subtrack 13 has a lower power. The power ratio of the latter laser beam to the former one must be determined based on the depth of the track to be formed after being developed. In consideration of factors such as the power distribution character of the laser beam and the developing control, the best mode is that the main track 12 is formed to have a deeper and broader U-shaped groove, and the subtrack 13 is formed to have a V-shaped groove whose FWHM and depth are all equal to or less than half of those of the main track 12, wherein the two tracks are arranged in a double-spiral manner.

The laser beam used to form the subtrack 13 directly records the control signal in the subtrack 13 via the acoustic optical modulator. The frequency band of the control signal is lower than that of the final signal to be recorded in the optical recording carrier. For example, when the frequency band of the signal to be recorded is equal to or more than 1.5 MHz, the frequency of the control signal of the subtrack 13 is only 100 KHz. Since the decupled frequency of 100 KHz is merely 1 MHz, it is impossible for such frequency band to overlap with that of the data to be recorded, and mutual interference will not occur. In addition, in order to avoid the control signal of the subtrack 13 from containing a direct current component which will affect the control of the tracking system, the control signal to be recorded may firstly be channel-encoded via a bi-phase modulation or a bi-phase mark modulation, and then recorded in the subtrack 13. After being developed, the glass substrate is subsequently subjected to conventional manufacturing processes of an optical recording carrier, such as stamper electroforming, separating, hole-punching, and plastic injection, to produce the optical recording carrier substrate 11.

After an optical recording carrier is made with the optical recording carrier substrate 11 having the main track 12 with a deeper U-shaped groove and the subtrack 13 with a shallower V-shaped groove, it is inserted into a recorder for recording. During the recording process, the tracking signal is extracted from the push-pull signal of the optical pickup head via a low pass filter, so as to control the tracking servo system; and the control signal is filtered out from the push-pull signal via a high-pass or band-pass filter to control the rotational servo system, and then the control signal is transferred to a decoding unit to undergo a decoding process, by which the recording process can be controlled.

### Example 2: optical recording carrier compatible with CD-R

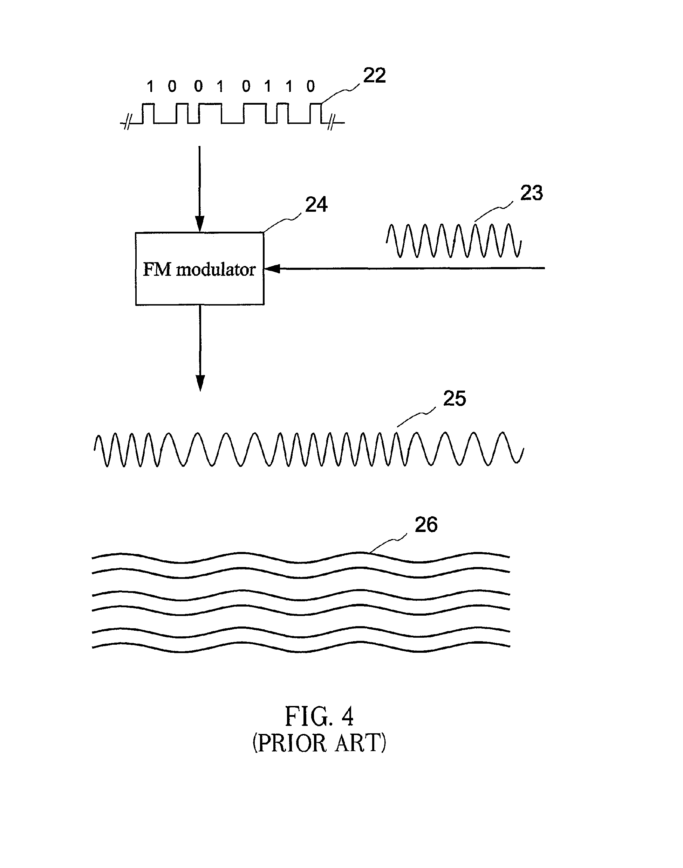

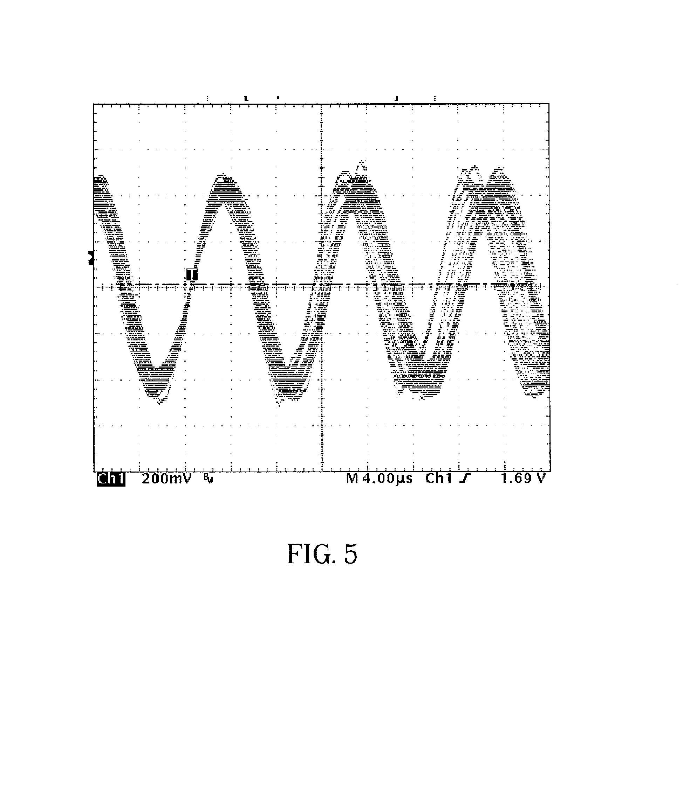

FIG. 4 is a schematic diagram illustrating a frequency modulation method for a conventional CD-R optical recording carrier. FIG. 5 shows a waveform of a wobble signal for a conventional CD-R optical recording carrier. As mentioned above, a CD-R optical recording carrier adopts the frequency modulation method to modulate a control data (absolute time-code in pre-groove data, ATIP data) in a track wobble, and its track pattern and the read control signal are shown in FIG. 4. The control data is firstly channel-modulated (via a bi-phase mark modulation) to produce a binary-coded data stream 22. A 22050 Hz frequency is used as a carrier 23 for frequency-modulating, via a FM modulator 24, the binary-coded data stream 22 which has undergone the channel encoding, so as to produce a modulated wobble signal 25. Next, the wobble signal 25 is used to drive an optical device to produce a wobble track 26. The track of the CD-R optical recording carrier expresses a periodical wobble, of which the frequency is 22050 Hz at the nominal scanning velocity. The deviation of the modulation set by the FM modulator 24 is 1 KHz, so the 21050 Hz frequency represents a low level of the binary code, while 23050 Hz represents a high level. Since the data stream 22 contains identical numbers of the high levels and the low levels, the average reading frequency thereof is remained at 22050 Hz. When the optical pickup head reads track data, this 22050 Hz central frequency may be locked based on the frequency changes of the track modulation, so that the scanning velocity can be adjusted to a proper value. For a tracking signal obtained by the optical pickup head, its frequencies around 22050 Hz need to be filtered via a band-pass filter to produce a proper push-pull signal, i.e. the wobble signal 25. A waveform of the wobble signal 25 expressed by an oscilloscope is shown in FIG. 5. The wobble signal 25 is further frequency-demodulated into a binary channel code, and finally decoded to produce the control code.

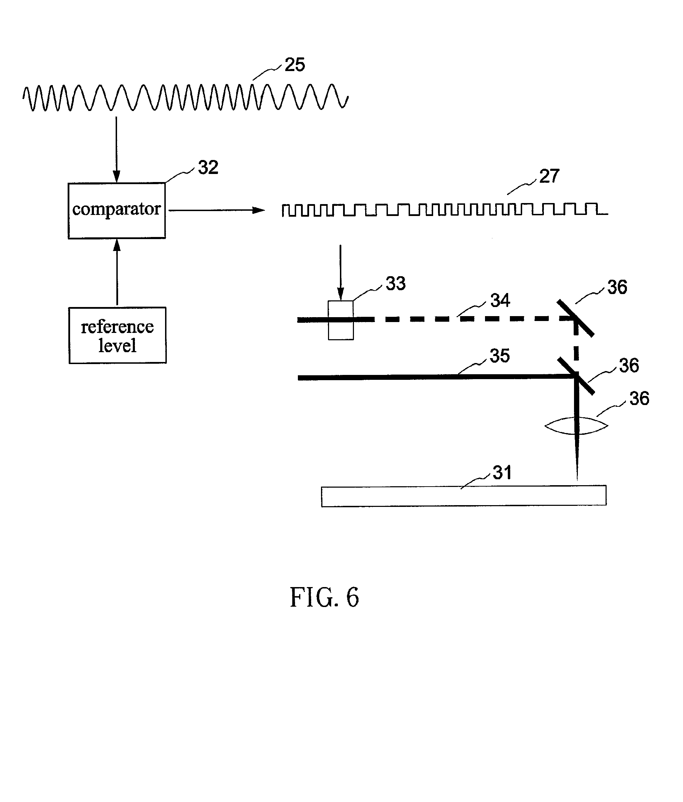

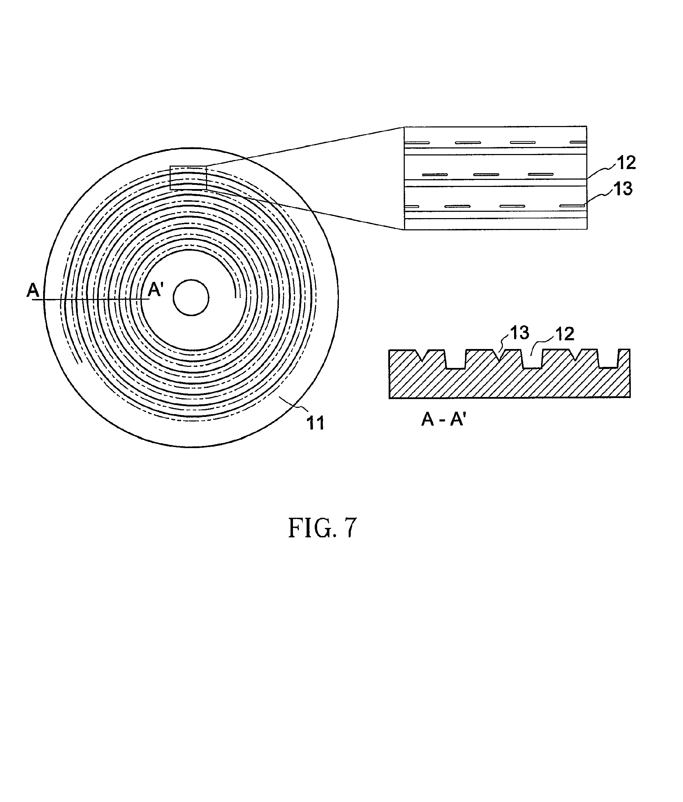

FIG. 6 is a schematic diagram illustrating the production of a CD-R compatible optical recording carrier using the manufacturing method according to the present invention, and FIG. 7 is a schematic diagram illustrating the structure of a CD-R compatible optical recording carrier according to the present invention. As shown in FIG. 6, according to the method of the present invention, an equivalent CD-R tracking signal can be established, thereby equivalently enabling the tracking system of a disk driver to obtain the wobble signals. The method is described as follows. The frequency-modulated sinusoidal wave signal that is to be recorded in a CD-R track, i.e. the wobble signal 25, is converted to a square wave signal 27 by a comparator 32, and the duty cycle of the square wave signal 27 can be freely adjusted by changing the reference level signal, which is usually set at 50%. The square wave signal 27 is input to a laser power control device used for forming the subtrack 13, such as the acoustic optical modulator 33. The laser power control device can be used to control the laser power by turning on and off a laser beam 34 when forming the subtrack 13 so the exposure can be performed to the rotating glass substrate 31 coated with photoresist. Meanwhile, the main track 12 adopts a fixed-power laser beam 35 of which the power is much more than that of the subtrack 13 and in which no wobble control is included. The two laser beams focus on a surface of the glass substrate 31 via a lens set 36, advance along predetermined spiral tracks, and then expose the photoresist layer coated on the surface. The distances of the two track exposing spots relative to the rotation center are adjusted to be within a range of 1/3 to 1/2 of the distance between two adjacent main tracks. After the exposure, the exposed portions are washed away in a subsequent developing step, and two spiral tracks, which are the main track 12 and the subtrack 13, are formed as shown in FIG. 7. The main track 12 is a continuous U-shaped groove, while the subtrack 13 includes intermittent V-shaped pits. The FWHM and depth of the V-shaped pits of the subtrack 13 are narrower and shallower than those of the U-shaped groove of the main track 12. In addition, the subtrack 13 is closer to one of the two adjacent main tracks 12, wherein the distance between the subtrack 13 and the main track 12, which is the one closer to the subtrack 13 among the two adjacent main tracks 12, is within a range of 1/3 to 1/2 of the distance between two adjacent main tracks 12. The exposed and developed glass substrate is subsequently subjected to conventional CD-R manufacturing processes to produce a CD-R.

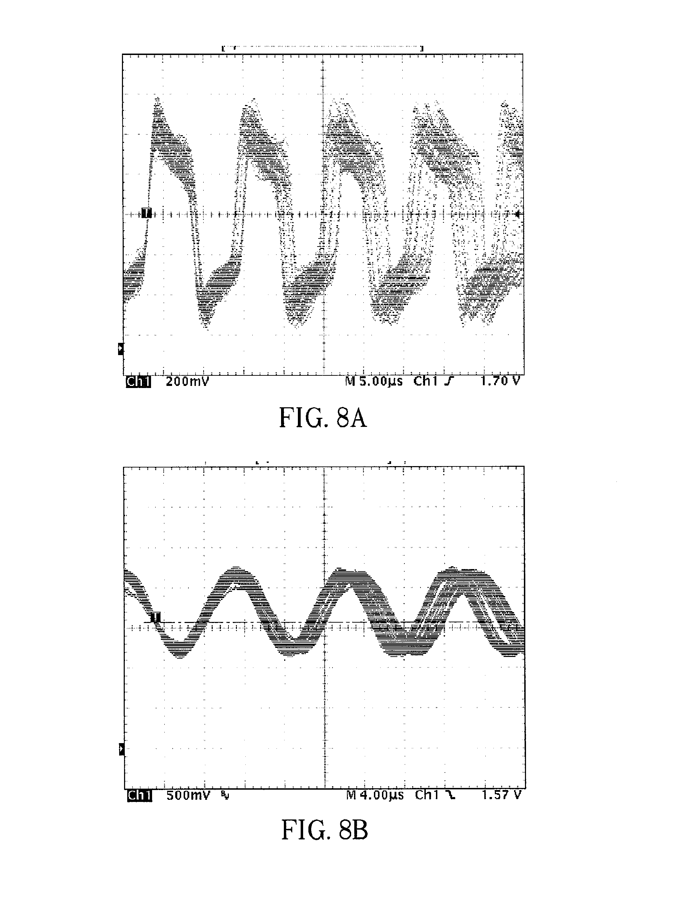

When recording with the CD-R optical recording carrier produced by the above method, a push-pull method is employed to perform the tracking. Since the subtrack 13 is very shallow and narrow, the center of the tracking spot is located almost at the center of the main track 12. However, the tracking spot may as well beam at the subtrack 13. Since the intermittent V-shaped pits of the subtrack 13 represent frequency modulation signals for an original CD-R, the optical pickup head will read out a modulation waveform identical to that of a CD-R wobble signal (see FIG. 8B). FIG. 8A shows the waveform of an original push-pull signal without being band-pass filtered, while FIG. 8B shows the waveform of a push-pull signal being band-pass filtered, which is similar to the waveform of the general CD-R wobble signal shown in FIG. 5. The control signal may be read out from this signal by conventional CD-R reading and decoding methods, so as to further control the burning process. In fact, the format of the optical recording carrier of the present invention is fully compatible with the conventional CD-R format. Since there is track wobble in the conventional CD-R disc, the optical pickup head does not always travel along the centerline of the wobbled track during the tracking. Therefore, when recording data, laser recording spots 14 used to record data may frequently deviate from the track, thus the pits burned by the laser recording spots 14 also deviate from the track and are not always accurately located on the track (as shown in FIG. 11A). Accordingly, a reading error is prone to occur when reading data, and the jitter of the readout signal may be increased. On the contrary, for the optical recording carrier compatible with CD-R produced by the present invention, the main track 12 used to record the data is not formed in a wobbled pattern as the conventional CD-R, so the laser recording spots 14 used to record data constantly remain on the centerline of the track during the data recording process. As a result, the pits burned by the laser recording spots 14 will less likely to deviate from the track and accurately located on center positions of the track (as shown in FIG. 11B). Therefore, reading error is not prone to occur during the data reading process, and the jitter for the track can be lower (better).

The above CD-R compatible optical recording carrier is not the only embodiment of the present invention. In fact, the laser beam's intensity of the subtrack 13 may also be modulated. As shown in FiGs. 9A-9C, it has been proved that various aspects of subtrack 13 can be formed on the CD-R compatible optical recording carrier. FIG. 9A shows the case that uses intermittent pits, which are getting deeper and broader and then getting narrower and shallower, to record data of the subtrack 13, and a wobble signal waveform more similar to the sinusoidal wave may be obtained via such format of optical recording carrier. FIG. 9B shows the case that achieves the same object by means of the width changes of the subtrack 13. FIG. 9C shows the case that uses the length changes of the pits to enable the optical reading signal to obtain a wobble signal similar to that of CD-R. The exemplary track patterns of the present invention are described for illustrating a high degree of freedom in selecting the track pattern of the subtrack 13 for recording the control signal. In addition, all track patterns mentioned above are compatible with CD-R.

## Claims

1. Recordable optical recording carrier comprising:
spiral tracks provided in a data recording area, the spiral tracks including a main track (12) being a continuous groove used to record user data to be stored, and a subtrack (13) configured to record control data including parameter data and address information for controlling a recording process,
wherein the control data recorded in the subtrack (13) includes a clock signal which enables the control data to be independently decoded without using any signal provided by the main track (12), the subtrack (13) has a narrower full width at half maximum (FWHM) and a shallower depth than the main track, a distance (d') between the main track (12) and the subtrack (13) is less than half of a distance (d) between two adjacent main tracks (12).

2. Optical recording carrier according to the preceding claim, wherein no wobble is applied on the main track (12).

3. Optical recording carrier according to one of the preceding claims, wherein the full width at half maximum (FWHM) and the depth of the subtrack (13) are equal to or less than half of those of the main track (12).

4. Optical recording carrier according to one of the preceding claims,
wherein a ratio of the volume of the subtrack (13) to the volume of the main track (12) is less than 1/4.

5. Optical recording carrier according to one of the preceding claims,
wherein the distance (d') between the main track (12) and the subtrack (13) is equal to or more than 1/3 of the distance (d) between the two adjacent main tracks (12).

6. Optical recording carrier according to one of the preceding claims,
wherein the subtrack (13) is a continuous groove of which the width has been modulated through a modulation.

7. Optical recording carrier according to one of the preceding claims,
wherein the subtrack (13) is formed by arranging a plurality of intermittent pits of which the lengths, widths, or intervals have been modulated through a modulation.

8. Optical recording carrier according to one of claims 6 or 7, wherein the modulation is a frequency modulation.

9. Method for manufacturing a recordable optical recording carrier compatible with CD-R, comprising the steps of:
providing spiral tracks in a data recording area, the spiral tracks including a main track (12) being a continuous groove used to record user data to be stored, and a subtrack (13) in which absolute time code data of CD-R is recorded for controlling a recording process,
wherein the subtrack (13) has a narrower full width at half maximum (FWHM) and a shallower depth than the main track, and a distance (d') between the main track (12) and the subtrack (13) is less than half of a distance (d) between two adjacent main tracks (12).

10. Method according to claim 9, wherein no wobble is applied on the main track (12).

11. Method according to one of claims 9 or 10, wherein the full width at half maximum (FWHM) and the depth of the subtrack (13) are configured to be equal to or less than half of those of the main track (12).

12. Method according to one of claims 9 to 11, wherein a ratio of the volume of the subtrack (13) to the volume of the main track (12) is configured to be less than 1/4.

13. Method according to one of claims 9 to 12, wherein the distance (d') between the main track (12) and the subtrack (13) is configured to be equal to or more than 1/3 of the distance (d) between the two adjacent main tracks (12).

14. Method according to one of claims 9 to 13, wherein the subtrack (13) is configured to be a continuous groove of which the width has been modulated, and a variation of the width is configured to be equivalent to an absolute time code signal of CD-R.

15. Method according to one of claims 9 to 14, wherein the subtrack (13) is formed by arranging a plurality of intermittent pits of which the lengths, widths, or intervals have been modulated, a variation of the lengths, widths, or intervals of the pits is equivalent to a frequency modulation of an absolute time code data of CD-R.
